# EUROPÄISCHE PATENTANMELDUNG

(11) **EP 1 605 358 A2**
(43) Veröffentlichungstag der Anmeldung: **14.12.2005**
(21) Anmeldenummer: 05009149.5
(22) Anmeldetag: 26.04.2005
(51) Int. Cl.: G06F 11/30

(54) **Datenverarbeitungsgerät mit internen Baugruppen**

(30) Priorität: 28.05.2004 DE 102004026126
(71) Anmelder: Fujitsu Siemens Computers GmbH, 80807 München (DE)
(72) Erfinder: Sommer, Johannes, 86165 Augsburg (DE); Horrer, Rüdiger, 86495 Eurasburg (DE); Goscinski, Klaus, 86150 Augsburg (DE); Fiala, Holger, 86399 Bobingen (DE)
(74) Vertreter: Epping - Hermann - Fischer

(57) **Zusammenfassung**

Die Erfindung betrifft ein Datenverarbeitungsgerät (1) mit internen Baugruppen (2 bis 5), die direkt oder indirekt miteinander verbunden sind und zur Abbildung einer Gesamtfunktion Daten oder Informationen, oder elektrische oder optische Signale, miteinander austauschen, wobei jede einzelne Baugruppe (2 bis 5) zumindest einen nichtflüchtigen Speicher (6) aufweist, in dem Betriebszustandsdaten der Baugruppe ablesbar sind und wobei das Datenverarbeitungsgerät (1) ein Mittel (7) aufweist, das mit den nichtflüchtigen oder flüchtigen Speichern (6) der einzelnen Baugruppen (2 bis 5) verbunden ist und das die Betriebszustandsdaten jeder Baugruppe(2 bis 5) mit einem Identifikationsmerkmal der Baugruppe (2 bis 5) gesammelt in einem nichtflüchtigen Speicher (8) des Mittels (7) ablegt.

## Beschreibung

Die Erfindung betrifft ein Datenverarbeitungsgerät mit internen Baugruppen, die direkt oder indirekt miteinander verbunden sind und zur Abbildung einer Gesamtfunktion Daten oder Informationen, oder elektrische oder optische Signale, miteinander austauschen.

Datenverarbeitungsgeräte der genannten Art sind nicht hundertprozentig ausfallsicher. Das heißt auftretende Fehler an einer Baugruppe entstehen, und wirken sich in verschiedener Art und Weise auf die Gesamtfunktion des Datenverarbeitungsgeräts aus. Dabei kann es sein, dass in den Baugruppen auftretende Fehler erst lange Zeit nach dem Entstehen des Fehlers zu Auswirkungen führen und bemerkt werden. Der Fehler ist dann in einer aufwendigen Fehlersuche zu ermitteln und das Symptom wird oftmals anderen Ursachen als der wirklich fehlerhaften Komponente zugewiesen, da ein Mangel an der wirklich fehlerhaften Komponente bislang nicht sichtbar wurde. Dies führt bei Reparaturmaßnahmen zu erhöhten Kosten, da mitunter Komponenten bzw. Baugruppen getauscht werden, die möglicherweise gar nicht defekt sind. Eine präzise Fehlerortung ist so oft nicht möglich, und mit vertretbaren Aufwand oft auch nicht sinnvoll.

Die einzelnen verwendeten Baugruppen in solchen Datenverarbeitungsgeräten weisen jeweils interne Speicher auf, die von einer nichtflüchtigen oder flüchtigen Art sind und die die an den Baugruppen auftretenden Fehler in zeitlicher Reihenfolge in Form von Betriebszustandsdaten abspeichern.

Es sind Softwareprodukte bekannt, die die Inhalte dieser nichtflüchtigen oder flüchtigen Speicher jeder einzelnen Baugruppe auszulesen in der Lage sind und damit einen Fachmann in die Lage versetzen, den Fehler zu analysieren und präzise zu orten. Da diese Softwareprodukte nur dann ihre Aufgabe erfüllen, wenn das Datenverarbeitungsgerät an sich noch funktionsfähig ist und nur weniger wichtige bzw. nicht stets benötigte Teilkomponenten oder Teilbaugruppen mit Fehlern behaftet sind, ist bei einem Totalausfall des Datenverarbeitungsgeräts diese Möglichkeit der softwaregestützten Fehleranalyse nicht möglich.

Es ist daher die Aufgabe der Erfindung, ein Hilfsmittel vorzusehen, das die Fehleranalyse auch bei einem Totalausfall des Systems unterstützt bzw. ermöglicht.

Diese Aufgabe wird durch die in Patentanspruch 1 vorgeschlagenen Maßnahmen gelöst und durch die in den Unteransprüchen beschriebenen Maßnahmen in vorteilhafter Weise erweitert.

Dabei ist in dem eingangs beschriebenen Datenverarbeitungsgerät ein Mittel vorgesehen, das mit den nichtflüchtigen oder flüchtigen Speichern der einzelnen Baugruppen verbunden ist und das die Betriebszustandsdaten jeder einzelnen Baugruppe mit einem Identifikationsmerkmal der Baugruppe gesammelt ablegt. Vorteilhaft daran ist, dass im Störungsfalle die gesammelt abgelegten Betriebszustandsdaten aller Baugruppen in diesem Mittel einsehbar sind. Die Datenübertragung an das Mittel erfolgt je nach Auführungsform entweder angestossen durch das Mittel selbst, oder angestossen durch den Prozessor des Datenverarbeitungsgeräts, indem die Daten aus den nichtflüchtigen oder flüchtigen Speichern der einzelnen Baugruppen durch das Mittel selbsttätig ausgelesen werden und z.B. chronologisch in einem eigenen nichtflüchtigen Speicher des Mittels ablegt werden. Eine andere Variante ist, dass in vorbestimmten Zeitabständen jede einzelne Baugruppe die Dateninhalte des nichtflüchtigen Speichers, nämlich die Betriebszustandsdaten, an das Mittel übermittelt und diese dort nach der Reihenfolge des Eingangs abgelegt, beziehungsweise gespeichert, werden.

Besonders vorteilhaft ist aber die Variante der durch das Mittel selbst angestoßenen Datenübermittlung, da dies keine Änderungen in den aktuell bestehenden Architekturen der Baugruppen erfordern würde, sondern einzig durch das Mittel und dessen Hinzufügung in das Datenverarbeitungsgerät das Speichern der Betriebszustandsdaten möglich ist.

Um die Daten aus dem Mittel abzufragen, stehen verschiedene Varianten zur Verfügung. Im Falle einer Totalhavarie und eines nicht funktionierenden Datenverarbeitungsgeräts kann das Mittel entnommen und an eine Auslesevorrichtung angeschlossen werden. Das Mittel ist in vorteilhafter Weise mit einem nichtflüchtigen Speicher versehen, der in einer vorteilhaften Ausführungsform mit einem Prozessor oder Mikroprozessor kombiniert ist. Zugriffe und Verschlüsselungen der Betriebszustandsdaten, sowie die Art und Weise der Datenübertragung von den Baugruppen zu dem Mittel und zum nichtflüchtigen Speicher des Mittels, verwaltet je nach Ausführungsform entweder der Prozessor des Datenverarbeitungsgerätes oder der Prozessor des Mittels. Die Ablage der Betriebszustandsdaten erfolgt in dem nichtflüchtigen Speicher des Mittels.

Verbleibt zur Fehlersuche das Mittel in dem Datenverarbeitungsgerät, so ist in vorteilhafter Weise über eine Schnittstelle nach außen, das Mittel direkt abfragbar, das heißt, die Schnittstelle ermöglicht einen Zugriff auf den nichtflüchtigen Speicher des Mittels und somit eine Information über die Betriebszustandsdaten in chronologischer Reihenfolge der einzelnen Baugruppen des Datenverarbeitungsgeräts.

Wurde zu einem zurückliegenden Zeitpunkt eine Baugruppe getauscht oder durch eine andere leistungsfähigere oder ähnliche ersetzt, so ist auch diese Änderung in dem Mittel hinterlegt.

Um nur autorisierten Personen einen Zugriff auf das Mittel zu ermöglichen erfolgt in einer vorteilhaften Ausführungsform die Datenablage in dem nichtflüchtigen Speicher des Mittels in einer verschlüsselten Art und Weise. In einer weiteren vorteilhaften Ausführungsform ist der Zugriff auf das Mittel nur durch einen Vergleich mit Identifikationsmerkmalen, wie zum Beispiel Kennwörtern, möglich.

Im Folgenden ist die Erfindung anhand zweier Figuren näher erläutert. Es zeigt:
- die Figur 1 eine schematische Darstellung eines Datenverarbeitungsgeräts,
- die Figur 2 ein erfindungsgemäßes Mittel in Verbindung mit einem externem Datenlesegerät.

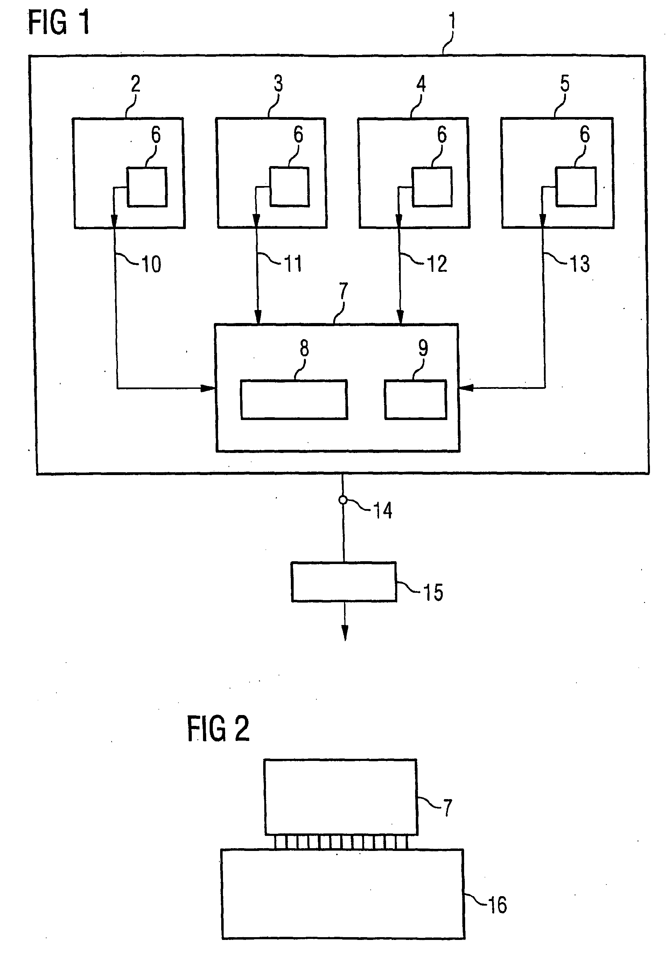

Ein Datenverarbeitungsgerät 1 weist stets mehrere Komponenten bzw. Baugruppen 2, 3, 4, 5 auf. Im in Figur 1 dargestellten Beispiel sind vier Baugruppen schematisch dargestellt, eine Festlegung auf vier Baugruppen erfolgt damit nicht. Ein Datenverarbeitungsgerät kann eine beliebige Anzahl von Baugruppen enthalten. Dies ist im wesentlichen abhängig von der Größe und Ausführungsform und auch der Aufgabe, die das Datenverarbeitungsgerät zu erfüllen hat. So ist nicht auszuschließen, dass z.B. eine Kaskadierung von mehreren gleichen Komponenten zum Beispiel von einer Vielzahl von Personal Computern zusammengeschlossen, als ein (Zahlwort) Datenverarbeitungsgerät wirkt. Jeder dieser einzelnen Personal Computer stellt dann eine Baugruppe dar, wobei jede einzelne Baugruppe wieder Unterbaugruppen enthällt. Die Erfindung ist unabhängig von der Größe und Ausführungsform eines Datenverarbeitungsgeräts, und ist geeignet Betriebszustandsdaten einer beliebigen Art und Anzahl von Baugruppen zu sammeln und zu speichern.

Jede einzelne Baugruppe 2, 3, 4, 5 erfüllt eine Aufgabe und ist im Grunde ein mehr oder weniger komplexes elektronisches Gerät wie z.B. eine Grafikkarte, ein Prozessor, ein Mainboard, ein physikalisches Laufwerk, eine Datenschnittstelle zu einem Eingabe- oder Ausgabegerät oder zu einem Computerperipheriegerät. Jede einzelne Baugruppe 2, 3, 4, 5 enthält für sich einen nichtflüchtigen oder flüchtigen Speicher 6, in dem die Betriebszustandsdaten der jeweiligen Baugruppe 2, 3, 4, 5 bei jeder Änderung der Daten, oder in zeitlich vorbestimmten Abfolgen abgelegt werden.

Die Betriebszustandsdaten aus diesem nichtflüchtigen Speicher werden an ein Mittel 7 übertragen. Das Mittel 7 ist im Folgenden als Logdog-Chip 7 bezeichnet. Im Ausführungsbeispiel umfasst der Logdog-Chip 7 eine nichtflüchtige Speichereinheit 8 und eine Prozessoreinheit 9. Die nichtflüchtige Speichereinheit 8 dient zur Ablage der von den Baugruppen bzw. von den nichtflüchtigen Speichern 6 der Baugruppen 2 bis 5 übertragenen Betriebszustandsdaten. Der Logdog-Chip 7 speichert diese Betriebszustandsdaten z.B. in chronologischer Reihenfolge und ordnet sie Identifikationsmerkmalen der einzelnen Baugruppen 2 bis 5 zu.

Die Datenübertragung erfolgt über Verbindungen 10, 11, 12 und 13 zwischen den einzelnen Baugruppen 2, 3, 4 und 5 und dem Logdog-Chip 7. Die Prozessoreinheit 9 des Logdog-Chip 7 übernimmt dabei unter anderem die Aufgabe der Datenübertragung und Datenverwaltung. Die Prozessoreinheit 9 des Logdog-Chip 7 erfüllt noch zahlreiche andere Aufgaben, die im Zusammenhang mit den gespeicherten Betriebszustandsdaten im Logdog-Chip 7 stehen. So ist mit der Prozessoreinheit 9 eine Verschlüsselung der Daten im Logdog-Chip 7 realisierbar. Auch ist ein userabhängiger bzw. ein sogenannter geschützter Datenzugriff auf die gespeicherten Informationen und Betriebszustandsdaten im Logdog-Chip 7 möglich.

Das Datenverarbeitungsgerät 1 weist eine Datenschnittstelle 14 auf, die nach außen geführt ist und von außen einen Zugriff auf den Logdog-Chip 7 ermöglicht. Damit werden Zugriffe für Systemadministratoren einfach und ohne mechanisches Öffnen des Datenverarbeitungsgeräts möglich. An dieser Schnittstelle 14 sind dann sogenannte Dongles 15 anschließbar. Damit ist eine Entschlüsselung der im nichtflüchtigen Speicher 8 des Logdog-Chips 7 abgelegten verschlüsselten Daten möglich. Ebenso ist über den Dongle 15 eine geschützte Datenabfrage aus dem nichtflüchtigen Speicher 8 des Logdog-Chips 14 möglich, da nur autorisierte Benutzer im Besitz eines solchen Dongles 15 sind.

Alternativ ist über Netzwerk-Systeme, wie z.B. das Internet, ein Zugriff auf den Logdog-Chip 7 ebenso realisierbar. Damit ist in vorteilhafter Weise eine sehr gute Hotlineunterstützung durch Fernabfrage des Speicherinhalts des nichtflüchtigen Speichers bzw. der Betriebszustandsdaten jeder einzelnen Baugruppe des Datenverarbeitungsgeräts möglich. Somit ist beispielsweise an einer Hotline eine Ferndiagnose realisierbar, wenn eine Baugruppe schadhaft ist. Diese ist dann auch leicht zu identifizieren und an den Kunden kann eine neue Baugruppe übermittelt werden. Eine kostenintensive "Trial and Error" Fehlersuche wird damit vermieden.

Beginnend mit der ersten Inbetriebnahme des Datenverarbeitungsgeräts 1 beginnt auch die Aufzeichnung der Betriebszustandsdaten in demnichtflüchtigen Speicher 8 des Logdog-Chips 7. Somit sind alle während einer Lebensdauer eines Datenverarbeitungsgeräts 1 aufgetretenen Änderungen von Betriebszustandsdaten einzelner Baugruppen möglich. Ebenso sind so detaillierte Informationen zur Konfiguration des Datenverarbeitungsgeräts 1 und zum Beseitigen von Fehlern des Datenverarbeitungsgeräts 1 möglich.

Der Logdog-Chip 7 ist dem Datenverarbeitungsgerät 1 entnehmbar und mit einem externen Datenlesegerät 16 verbindbar. Dies ermöglicht in vorteilhafter Weise ein Lesen der Betriebszustandsdaten des Datenverarbeitungsgerätes, auch wenn dieses vollständig betriebsunfähig ist.

### Bezugszeichenliste

- 1: Datenverarbeitungsgerät
- 2,3,4,5: Baugruppen
- 6: nichtflüchtiger oder flüchtiger Speicher der Baugruppen 2, 3, 4, 5
- 7: Mittel (Logdog-Chip)
- 8: nichtflüchtiger Speicher im Logdog-Chip
- 9: Prozessor im Logdog-Chip
- 10,11,12,13: Verbindungen
- 14: Schnittstelle nach außen
- 15: Dongle
- 16: Externes Datenlesegerät

## Patentansprüche

1. Datenverarbeitungsgerät (1) mit internen Baugruppen (2 bis 5), die direkt oder indirekt miteinander verbunden sind, und zur Abbildung einer Gesamtfunktion Daten oder Informationen oder elektrische oder optische Signale miteinander austauschen, wobei jede einzelne Baugruppe (2 bis 5) zumindest einen nichtflüchtigen oder flüchtigen Speicher (6) aufweist, in dem Betriebszustandsdaten der Baugruppe (2 bis 5) ablesbar sind, und wobei das Datenverarbeitungsgerät (1) ein Mittel (7) aufweist, das mit dem nichtflüchtigen oder flüchtigen Speicher (6) der einzelnen Baugruppen (2 bis 5) verbunden ist, und das die Betriebszustandsdaten jeder Baugruppe (2 bis 5) mit einem Identifikationsmerkmal der Baugruppe (2 bis 5) gesammelt in einem nichtflüchtigen Speicher (8) des Mittels (7) ablegt.

2. Datenverarbeitungsgerät (1) nach Patentanspruch 1,
**dadurch gekennzeichnet, dass**
das Mittel (7) die Betriebszustandsdaten jeder Baugruppe (2 bis 5) in vorbestimmten Zeitabständen aus dem nichtflüchtigen oder flüchtigen Speicher (6) der einzelnen Baugruppen (2 bis 5) ausliest.

3. Datenverarbeitungsgerät (1) nach Patentanspruch 1,
**dadurch gekennzeichnet, dass**
jede einzelne Baugruppe (2 bis 5) die Betriebszustandsdaten in vorbestimmten Zeitabständen an das Mittel (7) übermittelt.

4. Datenverarbeitungsgerät (1) nach Patentanspruch 1 und 2,
**dadurch gekennzeichnet, dass**
die zuletzt abgelegten Betriebszustandsdaten der nichtflüchtigen oder flüchtigen Speicher (6) der einzelnen Baugruppen (2 bis 5) ausgelesen werden.

5. Datenverarbeitungsgerät (1) nach Patentanspruch 1 und 3,
**dadurch gekennzeichnet, dass**
die zuletzt abgelegten Betriebszustandsdaten der nichtflüchtigen oder flüchtigen Speicher (6) jeder einzelnen Baugruppe an das Mittel (7) übermittelt werden.

6. Datenverarbeitungsgerät (1) nach Patentanspruch 1 bis 5,
**dadurch gekennzeichnet, dass**
das Mittel zumindest aufweist
- einen nichtflüchtigen Speicher (8) und
- einen Mikroprozessor (9).

7. Datenverarbeitungsgerät (1) nach Patentanspruch 1 bis 6,
**dadurch gekennzeichnet, dass**
das Mittel (7) die Betriebszustandsdaten in einer verschlüsselten Weise ablegt und die Betriebszustandsdaten nur mit einer entsprechenden Entschlüsselungsvorrichtung (15) auslesbar sind.

8. Datenverarbeitungsgerät (1) nach Patentanspruch 1 bis 7,
**dadurch gekennzeichnet, dass**
die Betriebszustandsdaten erst nach einem Vergleich mit Identifikationsmerkmalen eines Anwenders auslesbar sind.

9. Datenverarbeitungsgerät (1) nach Patentanspruch 7 bis 8,
**dadurch gekennzeichnet, dass**
eine Identifikations- und/oder Verschlüsselungsvorrichtung (15) mit dem Mittel über eine außenliegende Schnittstelle (14) verbindbar ist.

10. Datenverarbeitungsgerät (1) nach Patentanspruch 1 bis 9,
**dadurch gekennzeichnet, dass**
eine Fernabfragevorrichtung das Auslesen der gespeicherten Betriebszustandsdaten über ein Netzwerk ermöglicht, wobei die Fernabfragevorrichtung durch einen lokalen Anwender aktivierbar ist.

11. Datenverarbeitungsgerät (1) nach Patentanspruch 1 bis 10,
**dadurch gekennzeichnet, dass**
das Mittel (7) aus dem Datenverarbeitungsgerät (1) entnehmbar ist und einer externen Auslesevorrichtung (16) zuführbar oder daran anschließbar ist.
